(19) Europäisches Patentamt
European Patent Office
Office européen des brevets

(11) **EP 3 371 467 B1**

(12) **EUROPÄISCHE PATENTSCHRIFT**

(45) Veröffentlichungstag und Bekanntmachung des Hinweises auf die Patenterteilung:
**29.07.2020   Patentblatt 2020/31**

(21) Anmeldenummer: **16784839.9**

(22) Anmeldetag: **17.10.2016**

(51) Int Cl.:
*F16B 19/08* (2006.01)        *B21J 15/02* (2006.01)
*B21K 1/60* (2006.01)

(86) Internationale Anmeldenummer:
**PCT/EP2016/074849**

(87) Internationale Veröffentlichungsnummer:
**WO 2017/076619 (11.05.2017 Gazette 2017/19)**

(54) **HALBHOHLSTANZNIET FÜR DÜNNBLECHVERBINDUNGEN, VERFAHREN ZU SEINER HERSTELLUNG UND VERFAHREN ZUR HERSTELLUNG EINER VERBINDUNG**

SEMI-HOLLOW SELF-PIERCING RIVET FOR THIN SHEET METAL JOINTS, METHOD FOR PRODUCING SAID SEMI-HOLLOW SELF-PIERCING RIVET, AND METHOD FOR PRODUCING A JOINT

RIVET DE POINÇONNAGE SEMI-CYLINDRIQUE POUR LIAISON DE TÔLES MINCES, PROCÉDÉ DE FABRICATION ET PROCÉDÉ DE RÉALISATION D'UNE LIAISON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.11.2015   DE 102015118888**

(43) Veröffentlichungstag der Anmeldung:
**12.09.2018   Patentblatt 2018/37**

(73) Patentinhaber: **Böllhoff Verbindungstechnik GmbH**
**33649 Bielefeld (DE)**

(72) Erfinder:
• **HEGER, Mathias**
**33813 Oerlinghausen (DE)**
• **HENKE, Dennis**
**33442 Herzebrock-Clarholz (DE)**
• **JUNKLEWITZ, Daniel**
**33106 Paderborn (DE)**
• **MARXKORS, Andreas**
**33161 Hövelhof (DE)**
• **MENNE, Franz Ferdinand**
**33175 Bad Lippspringe (DE)**

(74) Vertreter: **HWP Intellectual Property**
**Ridlerstraße 35**
**80339 München (DE)**

(56) Entgegenhaltungen:
**EP-A1- 1 387 093        WO-A1-2007/132194**
**DE-A1-102013 020 504    DE-T2- 60 115 059**

**Beschreibung**

1. Gebiet der Erfindung

Die vorliegende Erfindung betrifft einen Halbhohlstanzniet, der im Speziellen für die Herstellung von Dünnblechverbindungen konfiguriert ist. Des Weiteren betrifft vorliegende Erfindung eine Verbindung von dünnen Bauteilen mit diesem Halbhohlstanzniet, ein Verfahren zur Herstellung dieser Verbindung sowie ein Herstellungsverfahren für den oben genannten Halbhohlstanzniet.

2. Hintergrund der Erfindung

Im Stand der Technik sind klassische Halbhohlstanzniete bekannt, wie sie beispielsweise in DE 10 2006 028 537 B3 und in DE 10 2005 052 360 A1 beschrieben sind. Die bekannten Halbhohlstanzniete besitzen einen Nietschaft mit einer zentralen Schaftbohrung, die sich größtenteils über mehr als 80 % der Gesamtlänge des Halbhohlstanzniets in Richtung des Nietkopfs erstreckt. Derartige Stanznietgeometrien sind allein schon aufgrund ihrer Länge und aufgrund des Aufspreizverhaltens der klassischen Halbhohlstanzniete nicht zur Herstellung von Dünnblechverbindungen geeignet.
DE 196 48 231 A1 beschreibt ein Verfahren zur Beeinflussung des Aufspreizverhaltens des in ein Bauteil eingetriebenen Halbhohlstanzniets. Um das Aufspreizen des Halbhohlstanzniets während des Fügeverfahrens zu beeinflussen, wird die zentrale Schaftbohrung ganz oder teilweise mit einer während des Stanzprozesses hydrostatisch wirkenden Substanz gefüllt. Bei diesen hydrostatisch wirkenden Substanzen handelt es sich um Werkstoffe, deren Aggregatszustand bei üblichen Raum- und Transporttemperaturen fest, bei der Verarbeitung jedoch schnell in einen flüssigen oder pastösen Aggregatszustand umgewandelt werden kann. In Abhängigkeit von dem Füllgrad der zentralen Schaftbohrung des Nietschafts ist der Beginn des Aufweitungsprozesses des Nietschafts veränderbar. Zwar setzt bei Vorhandensein einer Füllsubstanz im Schafthohlraum ein Aufweitungsprozess des Nietschafts früher ein als bei einer Aufweitung, die ausschließlich durch die Einwirkung einer Matrize oder zusätzlich durch eine angespitzte Nietfußgeometrie eingeleitet wird. Doch ist eine Anpassung des Aufweitungsverhaltens durch Füllen der zentralen Schaftbohrung des Halbhohlstanzniets nicht verlässlich, um den Halbhohlstanzniet an unterschiedliche Dicken und Werkstoffe einer herzustellenden Blechverbindung anpassen zu können.
Zur Herstellung einer Stanznietverbindung in Aluminiumblechen beschreibt EP 0 833 063 A1 die Nutzung eines Halbhohlniets, der aus Leichtmetall besteht. Im Speziellen weist der Leichtmetall-Halbhohlniet eine stumpfe Schneidkante sowie einen kegelförmigen Hohlraum im Nietschaft auf DE 601 15 059 T2 beschreibt einen Stanzniet zum Einsetzen in Flachmaterial.
Um ein vorteilhaftes Aufspreizen des Halbhohlniets während des Fügeverfahrens zu erzielen, erfüllt die Gesamtnietlänge des Leichtmetall-Halbhohlniets das Verhältnis 5:3 zur maximalen Schafthohlraumlänge. Dieses Verhältnis wurde genau deshalb gewählt, weil sich der Nietschaft des Halbhohlniets nach dem Lochen des oberen Aluminiumblechs nicht ausreichend spreizt, wenn die Schafthohlraumlänge geringer ist. Ist hingegen die Schafthohlraumlänge größer, wird dadurch das Lochen des oberen Aluminiumblechs beeinträchtigt. Des Weiteren führt die kegelige Gestalt des Schafthohlraums dazu, dass gerade die dünneren Bereiche des hohlen Schafts in radialer Richtung weit auswärts gespreizt werden. So erreicht der aufgespreizte Schaftbereich eine Ausdehnung, die dem Durchmesser des Halbhohlniets entspricht. Dieses radiale Aufspreizen wird zudem durch den Werkstoff des Halbhohlniets unterstützt, der aus Leichtmetall, wie beispielsweise Aluminium, besteht.
Verbindungen aus hochfesten Stählen werden gemäß DE 10 2013 020 504 A1 mit einem Stanzniet hergestellt, dessen Schaft an dem dem Nietkopf gegenüberliegenden Ende eine axiale Ausnehmung geringer axialer Tiefe aufweist. Im Vergleich zur Länge des Stanzniets ist die axiale Tiefe der Schaftbohrung beziehungsweise der axialen Ausnehmung kleiner als 30 % der Nietlänge. Zudem besteht der Stanzniet aus einem stabilen Stahlwerkstoff, da es bei dem beschriebenen Stanznietverfahren weniger auf das Aufspreizen des Nietschafts ankommt. Durch die relativ geringe axiale Tiefe der Schaftbohrung wird vielmehr erreicht, dass sich die Stanznietverbindung durch einen Stauchvorgang des Stanzniets herausbildet, der durch den Gegendruck des hochfesten Stahls der Werkstückanordnung hervorgerufen wird. Somit folgt die hier beschriebene Stanznietgeometrie und Verbindung einer ganz anderen Verbindungssystematik als beispielsweise in EP 0 833 063 A1 beschrieben ist.
Trotz der Vielzahl im Stand der Technik bekannter Verbindungselemente ist es eine Aufgabe vorliegender Erfindung, einen Halbhohlstanzniet bereitzustellen, der für die Herstellung von Fügeverbindungen in Dünnblechstapeln, vorzugsweise aus Leichtmetall, besonders geeignet ist. Eine weitere Aufgabe vorliegender Erfindung besteht darin, ein Verfahren zur Herstellung einer solchen Verbindung und eines solchen Halbhohlstanzniets zu liefern.

3. Zusammenfassung vorliegender Erfindung

Die obigen Aufgaben werden durch einen Halbhohlstanzniet gemäß dem unabhängigen Patentanspruch 1, durch eine Verbindung mit diesem Halbhohlstanzniet gemäß dem unabhängigen Patentanspruch 14, durch ein Verfahren zum Herstellen der Stanznietverbindung gemäß dem unabhängigen Patentanspruch 17 sowie durch ein Herstellungsverfahren für den oben genannten Halbhohlstanzniet gemäß dem unabhängigen Patentanspruch 19 gelöst. Vorteilhafte Ausgestaltungen und Weiterentwicklungen vorliegender Erfindung gehen aus der folgenden Beschreibung, den begleitenden Zeichnungen und den anhängenden Patentansprüchen hervor.

Der erfindungsgemäße Halbhohlstanzniet umfasst einen Nietkopf und einen Nietschaft mit einer zentralen Schaftbohrung, die eine gemeinsame zentrale Achse X besitzen, wobei der Nietschaft eine Schaftaußenfläche und eine die zentrale Schaftbohrung begrenzende Schaftinnenfläche aufweist, die Schaftbohrung eine Tiefe $T_B$ und der Halbhohlstanzniet eine Gesamtlänge $L_N$ umfasst und folgenden Zusammenhang erfüllt:

$$0{,}35 \leq \frac{T_B}{L_N} \leq 0{,}65, \text{ bevorzugt } 0{,}4 \leq \frac{T_B}{L_N} \leq 0{,}6,$$

wobei

die Gesamtlänge des Halbhohlstanzniets $L_N \leq 4$ mm, die Schaftaußenfläche und die Schaftinnenfläche im Nietschaft zumindest über einen Teilbereich des Nietschafts einen hohlzylindrischen Abschnitt bilden.

Die Geometrie des erfindungsgemäßen Halbhohlstanzniets ist im Speziellen an die Herstellung von Dünnblechverbindungen, also einem Stapel aus zwei oder mehreren dünnen Blechen, angepasst. Diese Anpassung schlägt sich im Speziellen in einer Reduktion der Gesamtlänge des Halbhohlstanzniets sowie in einer Reduktion der Tiefe der Schaftbohrung des Halbhohlstanzniets nieder. Aufgrund der an die Dünnblechverbindung angepasste Gesamtlänge $L_N$ des Halbhohlstanzniets wird die nach Durchdringen der Dünnbleche zum Aufspreizen zur Verfügung stehende Länge des Nietschafts reduziert. Ergänzend dazu bewirkt die angepasste Tiefe TB der Schaftbohrung ebenfalls ein spezielles Aufspreizverhalten des kopfabgewandten Endes des Nietschafts. Dadurch ist gewährleistet, dass neben einer verlässlichen Befestigung des Halbhohlstanzniets in dem Dünnblechstapel und einer verlässlichen Befestigung der Mehrzahl an Dünnblechen aneinander eine Beschädigung des Werkstoffs des Halbhohlstanzniets sowie des Materials von mindestens einem der Dünnbleche, vorzugsweise aller Dünnbleche, in der hergestellten Verbindung weitestgehend vermieden wird.

Gemäß einer bevorzugten Ausführungsform vorliegender Erfindung erstreckt sich die zylindrische Schaftaußenfläche zumindest bis zur Tiefe $T_B$ der Schaftbohrung mit einem konstanten Durchmesser in Richtung des Nietkopfs. Gemäß einer weiter bevorzugten Ausführungsform des Stanzniets erstreckt sich die zylindrische Schaftaußenfläche über die Tiefe $T_B$ der Schaftbohrung hinaus mit einem konstanten Durchmesser in Richtung des Nietkopfs. Diese geometrischen Ausgestaltungen haben den Vorteil, dass ein Übergang zwischen der zylindrischen Außenseite des Nietschafts und dem Nietkopf in Richtung Nietkopf verschoben wird. Dabei geht der senkkopfförmige Nietkopf bevorzugt über eine Fase oder bogenförmig mit einem Senkkopfradius in die zylindrische Außenseite des Nietschafts über. Mit Hilfe dieser Ausgestaltung beginnt die radiale Aufweitung des Nietschafts und somit die mechanische Belastung der zu verbindenden Bauteile oder Dünnbleche unabhängig von einer Aufweitung bzw. Aufspreizung des Nietschafts erst mit zunehmender Eindringtiefe des Stanzniets in den Dünnblechstapel, also später in Bezug auf den Verlauf eines Fügens des Stanzniets in einen Dünnblechstapel. Dadurch können die zu verbindenden Bauteile mechanische entlastet und somit die herzustellende Stanznietverbindung verlässlicher gemacht werden.

Gemäß einer bevorzugten Ausführungsform vorliegender Erfindung erfüllt ein Durchmesser $D_K$ des Nietkopfs und ein Durchmesser $D_S$ des Nietschafts folgende Relation:

$$1{,}35 \leq \frac{D_K}{D_S} \leq 1{,}75.$$

Ebenfalls mit Blick auf das oben diskutierte Aufspreizverhalten des Halbhohlstanzniets ist der Durchmesser $D_S$ des Nietschafts an den Durchmesser $D_K$ des Nietkopfs angepasst. Sofern die erfindungsgemäß bevorzugte Relation zwischen den genannten Durchmessern erfüllt ist, wird der Nietschaft während des Fügevorgangs mit einer deutlich geringeren radialen Außendehnung aufgespreizt, als der Nietkopf aufgrund seines Durchmessers $D_K$ aufweist.

Gemäß einer weiteren bevorzugten Ausführungsform vorliegender Erfindung sind die zylindrische Schaftaußenfläche und die Schaftinnenfläche radial außen durch eine radial einwärts geneigte Fase und radial innen durch einen radial inneren Radius miteinander verbunden, um eine Schneidkante zu bilden. Aufgrund dieser erfindungsgemäß bevorzugten Geometrie erzielt die Schneidkante des Halbhohlstanzniets als Ausstanzfläche einen Kreis mit minimaler Strichstärke im Gegensatz zu ringförmigen Ausstanzflächen bekannter Halbhohlstanzniete. Dieser bevorzugte Angriff der Schneidkante in einem nahezu punktuellen Flächensegment jeweils unterhalb der Schneidkante erzeugt eine Konzentration der wirkenden mechanischen Spannungen während des Fügevorgangs und unterstützt auf diese Weise das Eindringen des Halbhohlstanzniets in die Dünnblechlagen. Zudem ist der durch die Schneidkante eingeleitete Schneidenbereich über die Länge der Schaftbohrung ringförmig. Dies wird gerade durch die zylindrische Schaftaußenfläche unterstützt.

Es ist weiterhin bevorzugt, dass der Halbhohlstanzniet aus Stahl oder einer Stahllegierung besteht. Gemäß einer weiteren bevorzugten Ausführungsform des erfindungsgemäßen Halbhohlstanzniets geht die zylindrische Schaftaußenfläche oberhalb der Tiefe der Schaftbohrung über einen Kreisbogen mit einem Senkkopfradius oder über eine Fase in den Nietkopf über. Diese spezielle Formgestaltung nimmt Bezug auf das Verdrängungsverhalten des Werkstoffs des Dünnblechstapels während des Fügevorgangs, wobei mit beiden Ausführungsformen unterschiedliche Vorteile verbunden sind.

Eine weitere vorteilhafte Ausführungsform vorliegender Erfindung beschreibt einen Halbhohlstanzniet, der die folgenden Abmessungen aufweist: Nietlänge $L_N$ = 3 mm $\pm$ 0,1 mm, Tiefe der Schaftbohrung $T_B$ = 1,5 mm $\pm$ 0,1 mm, Senkkopfradius $R_S$ = 1,3 mm $\pm$ 0,15 mm sowie eine zylindrische Schaftaußenfläche, die sich in Richtung des Nietkopfs mit konstantem Durchmesser über die Tiefe der Schaftbohrung hinaus erstreckt. Gemäß einer weiteren bevorzugten Ausführungsform weist der Halbhohlstanzniet folgende Abmessungen auf: Nietlänge $L_N$ = 3 mm $\pm$ 0,1 mm, Tiefe der Schaftbohrung $T_B$ = 1,5 mm $\pm$ 0,1 mm, eine zylindrische Schaftaußenfläche, die sich in Richtung des Nietkopfs mit konstantem Durchmesser über die Tiefe der Schaftbohrung hinaus erstreckt, vorzugsweise über eine Länge $L_S$ ab dem Nietfuß von $$T_B \leq L_S \leq \frac{3}{2} \times T_B,$$ und eine Unterkopffase, mit der die zylindrische Schaftaußenfläche in einem Winkel von 30° $\pm$ 2° zwischen Fase und Kopfoberseite in den Nietkopf übergeht.

Gemäß einer anderen bevorzugten Ausgestaltung weist der Halbhohlstanzniet die folgenden Abmessungen auf: Nietlänge $L_N$=3,5 mm $\pm$ 0,1 mm, Tiefe der Schaftbohrung $T_B$ = 2 mm $\pm$ 0,1 mm, Senkkopfradius $R_S$=1,4 mm $\pm$ 0,15 mm sowie eine zylindrische Schaftaußenfläche, die sich in Richtung Nietkopf mit konstantem Durchmesser über die Tiefe der Schaftbohrung hinaus erstreckt. Gemäß einer weiteren bevorzugten Geometrie des Halbhohlstanzniets weist dieser die folgenden Abmessungen auf: Nietlänge $L_N$ = 3,5 mm $\pm$ 0,1 mm, Tiefe der Schaftbohrung $T_B$ = 2 mm $\pm$ 0,1 mm, eine zylindrische Schaftaußenfläche, die sich in Richtung des Nietkopfs mit konstantem Durchmesser über die Tiefe der Schaftbohrung hinaus erstreckt, vorzugsweise über eine Länge $L_S$ ab dem Nietfuß mit $$T_B \leq L_S \leq \frac{3}{2} \times T_B,$$ und eine Unterkopffase, mit der die zylindrische Schaftaußenfläche in einem Winkel von 30° $\pm$ 2° zwischen Fase und Kopfoberseite in den Nietkopf oder eine zylindrische Außenseite des Nietkopfes übergeht.

Zudem ist es erfindungsgemäß bevorzugt, den Halbhohlstanzniet mit einer Nietlänge von $L_N$ = 3 mm an seiner Schaftinnenfläche über einen Kreisbogen mit einem Radius $R_i$ = 0,65 mm $\pm$ 0,4 mm in die Schneidkante übergehen zu lassen. Bezogen auf einen Halbhohlstanzniet mit einer Nietlänge $L_N$ = 3,5 mm ist es bevorzugt, die Schaftinnenfläche über einen Kreisbogen mit einem Radius von $R_i$ = 1,5 mm $\pm$ 0,4 mm in die Schneidkante übergehen zu lassen.

Vorliegende Erfindung umfasst zudem eine Verbindung aus zumindest einem ersten Bauteil und einem zweiten Bauteil mit einem Halbhohlstanzniet, wobei die Bauteile vorzugsweise eine Gesamtdicke $T_{Gesamt} \leq 1,9$ mm aufweisen, eine dem Nietkopf zugewandte Decklage aus härterem Material besteht als mindestens eine dem Nietkopf abgewandte Basislage und die Basislage in Richtung der Längsachse des Halbhohlstanzniets dicker ausgebildet ist als die Decklage, wobei ein aufgespreizter Nietschaft mit einem Durchmesser $D_S$ im Verhältnis zu einem Durchmesser $D_K$ des Nietkopfs folgende Relation erfüllt:

$$\frac{D_K}{D_S} \geq 1,11, \text{ bevorzugt } \frac{D_K}{D_S} \geq 1,15 \text{ und weiter bevorzugt } \frac{D_K}{D_S} \geq 1,25.$$

Vorliegende Erfindung hat erkannt, dass bei der Herstellung von Dünnblechverbindungen, die aus zwei oder mehreren dünnen Blechen bestehen, die Lebensdauer der hergestellten Fügeverbindung durch das Aufspreizverhalten des verwendeten Halbhohlstanzniets negativ beeinflusst werden kann. Daraus wurde als wesentliches Kriterium für eine verlässliche Verbindung erkannt, dass der Schaft des Halbhohlstanzniets in radialer Richtung lediglich soweit aufgespreizt werden darf während des Fügevorgangs, dass er maximal 90 %, bevorzugt nicht mehr als 87 % und noch weiter bevorzugt nicht mehr als 80 % der radialen Ausdehnung des Durchmessers $D_K$ des Nietkopfs erreicht.

Gemäß vorliegender Erfindung bestehen bevorzugt der Halbhohlstanzniet und die Decklage aus Stahl oder einer Stahllegierung. Die im Dünnblechstapel vorhandene Basislage besteht vorzugsweise aus Aluminium, einer Aluminiumlegierung, einem Leichtmetall, einer Leichtmetalllegierung oder einem ähnlichen Material, das ähnliche Materialeigenschaften aufweist. Zudem ist es im Hinblick auf eine verlässliche Verbindung bevorzugt, dass der Halbhohlstanzniet in der Verbindung die Decklage vollständig durchstanzt hat. Auf diese Weise ist eine verlässlichere Verbindung erzielbar.

Des Weiteren beschreibt vorliegende Erfindung ein Verfahren zum Herstellen einer Stanznietverbindung in einer Decklage aus einem ersten Material und in mindestens einer Basislage aus einem zweiten Material, wobei das erste Material härter ist als das zweite Material, während das Verfahren folgende Schritte aufweist: Fügen eines Halbhohlstanzniets in die Decklage und die mindestens eine Basislage und Aufspreizen eines Nietschafts des Halbhohlstanzniets mit zentraler Schaftbohrung während des Fügevorgangs, sodass ein aufgespreizter Nietschaft mit einem Durchmesser $D_S$ im Verhältnis zu einem Durchmesser $D_K$ eines Nietkopfs folgende Relation erfüllt:

$$\frac{D_K}{D_S} \geq 1{,}25 \, .$$

Des Weiteren ist es im Rahmen des Verfahrens zur Herstellung der Stanznietverbindung bevorzugt, dass der Halbhohlstanzniet und die Decklage aus Stahl oder einer Stahllegierung bestehen, während die mindestens eine Basislage aus Aluminium, einer Aluminiumlegierung, ähnlichen weichen Materialien oder anderen Leichtmetallen oder Leichtmetalllegierungen bestehen. Zudem ist es im Hinblick auf eine verlässliche Verbindung bevorzugt, dass der Halbhohlstanzniet während des Herstellens der Verbindung, also während des Fügens des Halbhohlstanzniets in den Dünnblechstapel, die Decklage vollständig durchstanzt. Vorliegende Erfindung offenbart zudem ein Herstellungsverfahren für einen Halbhohlstanzniet, das die folgenden Merkmale aufweist: Kaltschlagen eines Drahtrohlings zu einem Halbhohlstanzniet mit einem Nietkopf und einem Nietschaft mit einer zentralen Schaftbohrung, die eine gemeinsame zentrale Achse X besitzen, wobei der Nietschaft eine Schaftaußenfläche und eine die zentrale Schaftbohrung begrenzende Schaftinnenfläche aufweist, die Schaftbohrung eine Tiefe $T_B$ und der Halbhohlstanzniet eine Gesamtlänge $L_N$ umfasst und folgenden Zusammenhang erfüllt:

$$0{,}35 \leq \frac{T_B}{L_N} \leq 0{,}65, \text{ bevorzugt } 0{,}4 \leq \frac{T_B}{L_N} \leq 0{,}6,$$

wobei
die Gesamtlänge des Stanzniets $L_N \leq 4$ mm, die Schaftaußenfläche und die Schaftinnenfläche im Nietschaft einen hohlzylindrischen Abschnitt bilden und sich die zylindrische Schaftaußenfläche zumindest bis zur Tiefe $T_B$ der Schaftbohrung mit einem konstanten Durchmesser in Richtung des Nietkopfs erstreckt.

4. Kurze Beschreibung der begleitenden Zeichnungen

Die bevorzugten Ausführungsformen vorliegender Erfindung werden unter Bezugnahme auf die begleitende Zeichnung näher erläutert. Es zeigen:

Fig. 1    eine Schnittansicht einer bevorzugten Ausführungsform des erfindungsgemäßen Halbhohlstanzniets mit einem Senkkopf, der über eine gebogene Außenfläche in den Nietschaft übergeht,

Fig. 2    Schnittansicht einer bevorzugten Ausführungsform des erfindungsgemäßen Halbhohlstanzniets mit einem Senkkopf, der mit einer Fase in den Nietschaft übergeht,

Fig. 3A    Schnittansicht einer bevorzugten Ausführungsform des erfindungsgemäßen Halbhohlstanzniets mit einem Senkkopf, dessen zylindrische Außenseite des Nietschafts sich bis unterhalb der Tiefe der Schaftbohrung erstreckt,

Fig. 3B    Schnittansicht einer weiteren bevorzugten Ausführungsform des erfindungsgemäßen Halbhohlstanzniets mit einem Senkkopf, dessen zylindrische Außenseite des Nietschafts sich bis oberhalb der Tiefe der Schaftbohrung in Richtung Nietkopf erstreckt,

Fig. 4    eine schematische Bauteilanordnung zur Verbindung mit dem erfindungsgemäßen Halbhohlstanzniet,

Fig. 5A    eine bevorzugte Stanznietverbindung von zwei Bauteilen mit Hilfe des erfindungsgemäß bevorzugten Halbhohlstanzniets, in der die Decklage nicht durch den Halbhohlstanzniet durchstanzt ist,

Fig. 5B    eine bevorzugte Stanznietverbindung von zwei Bauteilen mit Hilfe des erfindungsgemäß bevorzugten Halbhohlstanzniets, in der die Decklage durch den Halbhohlstanzniet vollständig durchstanzt ist, und

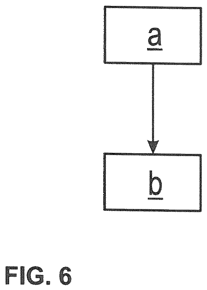

Fig. 6     ein Flussdiagramm einer bevorzugten Ausführungsform zur Herstellung einer Stanznietverbindung mit Hilfe des erfindungsgemäß bevorzugten Halbhohlstanzniets.

### 5. Detaillierte Beschreibung der bevorzugten Ausführungsformen vorliegender Erfindung

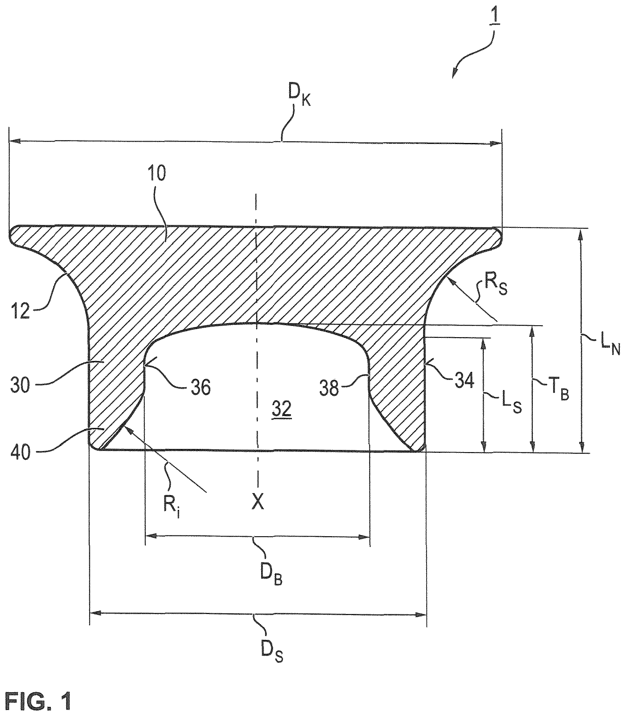

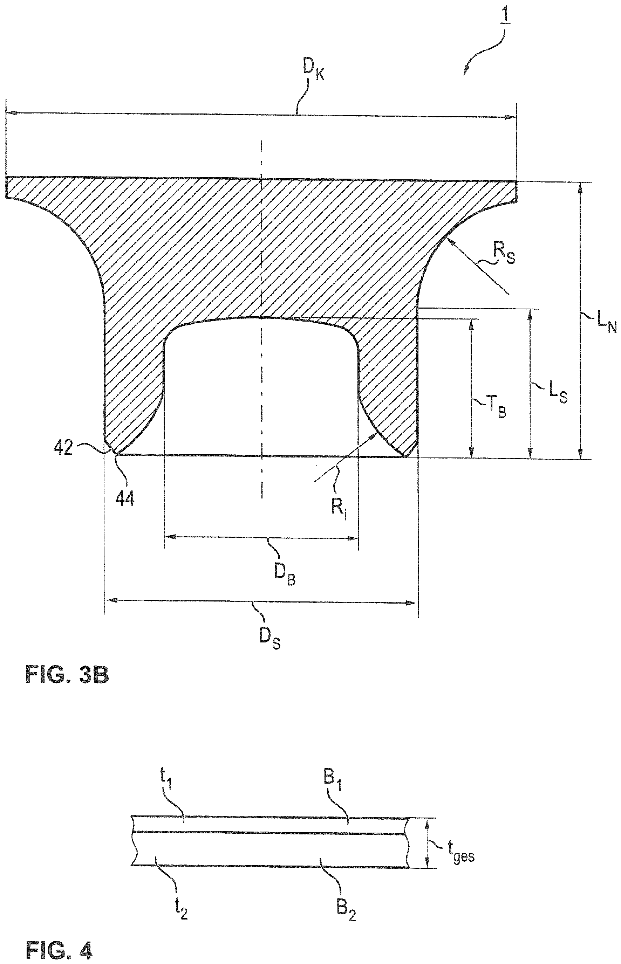

Der erfindungsgemäße Halbhohlstanzniet 1 wird mit Hilfe eines Kaltschlagverfahrens aus einem Drahtrohling hergestellt. Er weist die unten näher diskutierten geometrischen Merkmale auf. Wie man anhand der in den Figuren 1 bis 3 dargestellten bevorzugten Ausführungsformen des erfindungsgemäßen Halbhohlstanzniets 1 erkennen kann, umfasst dieser einen Nietkopf 10 und einen Nietschaft 30 mit einer zentralen Schaftbohrung 32, die eine gemeinsame zentrale Achse X besitzen. Der Nietschaft 30 weist eine Schaftaußenfläche 34 und eine die zentrale Schaftbohrung 32 begrenzende Schaftinnenfläche 36 auf. Die Schaftbohrung 30 besitzt eine Tiefe $T_B$ und der Halbhohlstanzniet 1 eine Gesamtlänge $L_N$. Der erfindungsgemäße Halbhohlstanzniet wird bevorzugt zur Herstellung einer Stanznietverbindung in einem Stapel aus einer Mehrzahl von dünnen Blechen $B_1$, $B_2$... (siehe Fig. 4) genutzt, die die Dicken $t_1$ und $t_2$ aufweisen. Dazu besitzt der Halbhohlstanzniet 1 die Gesamtlänge von $L_N \leq 4$ mm, wobei die Schaftaußenfläche 34 und die Schaftinnenfläche 36 im Nietschaft 30 einen hohlzylindrischen Abschnitt 38 bilden. Um eine verlässliche Verbindung der Bleche $B_1$, $B_2$ zu erzielen, erstreckt sich die zylindrische Schaftaußenfläche 34 zumindest über einen Teilbereich des Nietschafts mit konstantem Durchmesser in Richtung des Nietkopfs.

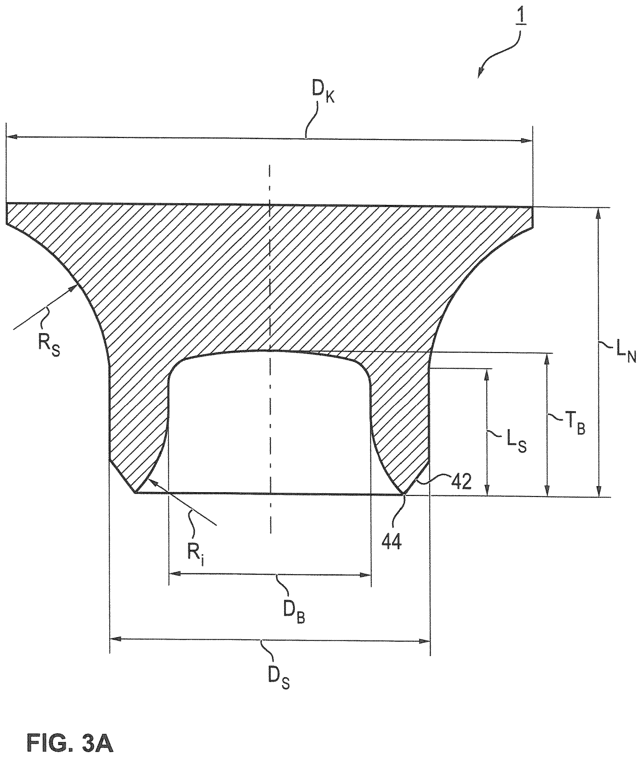

Gemäß einer bevorzugten Ausführungsform des Halbhohlstanzniets erstreckt sich die zylindrische Schaftaußenfläche 34 maximal bis zur Tiefe $T_B$ der Schaftbohrung 32 mit einem konstanten Schaftdurchmesser $D_S$ in Richtung des Nietkopfs 10 (siehe Fig. 3A). Gemäß einer weiteren bevorzugten Ausführungsform des erfindungsgemäßen Halbhohlstanzniets erstreckt sich die zylindrische Schaftaußenfläche 34 über die Tiefe $T_B$ der Schaftbohrung 32 hinaus mit einem konstanten Schaftdurchmesser $D_S$ in Richtung des Nietkopfs 10 (siehe Fig. 3B).

Zudem erfüllen die geometrischen Eigenschaften des erfindungsgemäß bevorzugten Halbhohlstanzniets 1 folgenden Zusammenhang:

$$0{,}35 \leq \frac{T_B}{L_N} \leq 0{,}65, \text{ bevorzugt } 0{,}4 \leq \frac{T_B}{L_N} \leq 0{,}6.\,.$$

Die Kombination eines relativ kurzen Halbhohlstanzniets 1 und der Schaftbohrung 32 mit geringer Tiefe $T_B$ haben sich als vorteilhaft erwiesen, um eine dauerhafte Dünnblechverbindung in den mindestens zwei Blechen $B_1$, $B_2$ zu erzielen.

Vorzugsweise besteht in der erfindungsgemäß bevorzugten Dünnblechverbindung eine dem Nietkopf 10 zugewandte Decklage $D_1$ der Dünnblechverbindung aus einem härteren Material als die darunter angeordnete mindestens eine Basislage $B_2$. Vorzugsweise ist die Decklage $B_1$ aus Stahl, einer Stahllegierung oder ähnlichen Materialien aufgebaut. Die Basislage $B_2$ besteht hingegen aus einem Leichtmetall oder einer Leichtmetalllegierung, wie Aluminium, einer Aluminiumlegierung oder ähnlichen Materialien.

Gemäß einer bevorzugten Ausführungsform vorliegender Erfindung ist die mindestens eine Basislage $B_2$ der Stärke $t_2$ dicker als die Decklage $B_1$ der Stärke $t_1$. Für die Stärken $t_1$, $t_2$ von Decklage $B_1$ und Basislage $B_2$ gilt in Bezug auf die Länge $L_N$ des verbindenden Halbhohlstanzniets 1

$$t_1 \leq 0{,}4 \times L_N$$

$$t_2 \geq 0{,}7 \times t_1\,.$$

Bezogen auf die Gesamtdicke $t_{Gesamt}$ des Dünnblechstapels, die sich aus der Summe der Stärken $t_1$, $t_2$ der Decklage $B_1$ und der mindestens einen Basislage $B_2$ ergibt, gilt vorzugsweise

$$t_{Gesamt} = t_1 + t_2 < (1{,}5 \text{ mm bis } 2{,}0 \text{ mm}), \text{ bevorzugt } t_{Gesamt} < 1{,}9 \text{ mm}.$$

Vorzugsweise ist die Basislage $B_2$ oder ein Stapel aus mehreren Basislagen $B_2$ deutlich dicker ausgebildet als die Decklage $B_1$, mit

$$t_{2a} + t_{2b} + \ldots = t_2 \geq 1{,}5 \times t_1 \ .$$

Während des Weiteren bevorzugt Durchmesser $D_K$ des Nietkopfs 10 und der Durchmesser Ds des Nietschafts 30 die Relation

$$1{,}35 \leq \frac{D_K}{D_S} \leq 1{,}75$$

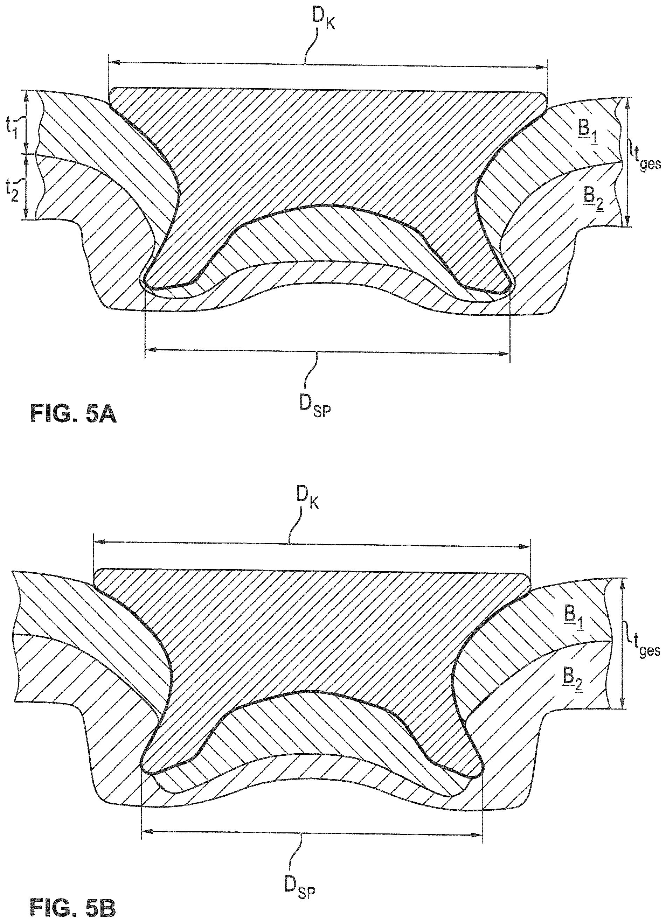

erfüllen, ergibt sich das in Fig. 5 veranschaulichte spezielle Aufspreizverhalten des erfindungsgemäß bevorzugten Halbhohlstanzniets 1 in der Dünnblechverbindung. Dieses Aufspreizverhalten zeichnet sich durch eine begrenzte Verformung des Nietfußes 40 radial auswärts aus. Das Aufspreizverhalten des Halbhohlstanzniets 1 in der Dünnblechverbindung ist charakterisiert durch das Verhältnis des Durchmessers $D_K$ des Nietkopfs 10 zum maximalen Durchmesser $D_{SP}$ des aufgespreizten Nietschafts 30, wie es in Fig. 5 dargestellt ist. Dementsprechend erfüllen der Durchmesser $D_K$ des Nietkopfs 10 und der Durchmesser $D_{SP}$ des aufgespreizten Nietschafts 30 folgende Relation:

$$\frac{D_K}{D_{SP}} \geq 1{,}11 \ , \text{bevorzugt} \ \frac{D_K}{D_{SP}} \geq 1{,}15 \ \text{und weiter bevorzugt} \ \frac{D_K}{D_{SP}} \geq 1{,}25.$$

Das Verhältnis des Durchmesser $D_K$ des Nietkopfs 10 zum Durchmesser $D_{SP}$ des aufgespreizten Nietschafts 30 ist in den Figuren 5A und 5B veranschaulicht. Wie man anhand von Fig. 5A erkennen kann, ist in dieser Verbindung die Decklage B1 mit der Dicke t1 nicht durchstanzt. Nichtsdestotrotz bilden der aufgespreizte Nietschaft 30 mit den verformten Lagen B1 und B2 einen ausreichenden Hinterschnitt für eine verlässliche Verbindung. Gemäß einer weiteren bevorzugten Ausführungsform vorliegender Erfindung weist die Verbindung gemäß Fig. 5B eine vollständig durchstanzte Decklage B1 auf. In diesem Fall verankert sich der aufgespreizte Nietschaft 30 in der weicheren Basislage B2 bzw. den weicheren Basislagen im Materialvergleich zur Decklage B1.

Während der Halbhohlstanzniet 1 vorzugsweise aus Stahl, einer Stahllegierung oder einem ähnlichen Material besteht, wird das Aufspreizverhalten gemäß einer weiteren bevorzugten Ausführungsform vorliegender Erfindung durch die Geometrie des Nietfußes 40 unterstützt. Entsprechend sind die zylindrische Schaftaußenfläche 34 und die Schaftinnenfläche 36 radial außen durch eine radial einwärts geneigte Fase 42 und radial innen durch einen Kreisbogen mit einem Radius $R_i$ über eine Schneidkante 44 miteinander verbunden (siehe Fig. 3).

Um das Setzen des Halbhohlstanzniets 1 in den Blechstapel $B_1$, $B_2$ zu unterstützten und eine verlässliche Verbindung zu erzielen, erstreckt sich gemäß der bereits oben erwähnten bevorzugten Ausgestaltung des Nietschafts 30 dessen zylindrische Schaftaußenfläche 34 und somit ein zylindrischer Schneidbereich des Nietschafts über eine Strecke $L_S$ beginnend am kopfabgewandten Ende des Halbhohlstanzniets 1. Im Speziellen erstreckt sich die zylindrische Schaftaußenfläche 34 in Richtung Nietkopf 10 mit konstantem Durchmesser $D_S$ bis maximal zur oder über die Tiefe $T_B$ der Schaftbohrung 32 hinaus in Richtung Nietkopf 10. Diese Schaftgeometrie beeinflusst positiv die mechanische Belastung des Nietschafts 30 während des Fügevorgangs. Dabei hat vorzugsweise die Länge $L_S$ der zylindrischen Schaftaußenfläche 34 gerade in Bezug auf die obige zweite Alternative ab dem Nietfuß 40 eine Größe von

$$T_B \leq L_S \leq \frac{3}{2} \times T_B \ .$$

Gemäß einer weiteren bevorzugten Ausführungsform vorliegender Erfindung geht der Nietkopf 10 in einem Kreisbogen 12 mit dem Radius $R_S$ in die zylindrische Schaftaußenfläche 34 über. Aufgrund dieser Gestaltung legt sich beim Herstellen der Fügeverbindung das Material der Decklage $B_1$ bevorzugt an den Kreisbogen 12 an, ohne Hohlstellen im Übergangsbereich zwischen Halbhohlstanzniet 1 und Material der Decklage $B_1$ zu bilden (siehe Fig. 1).

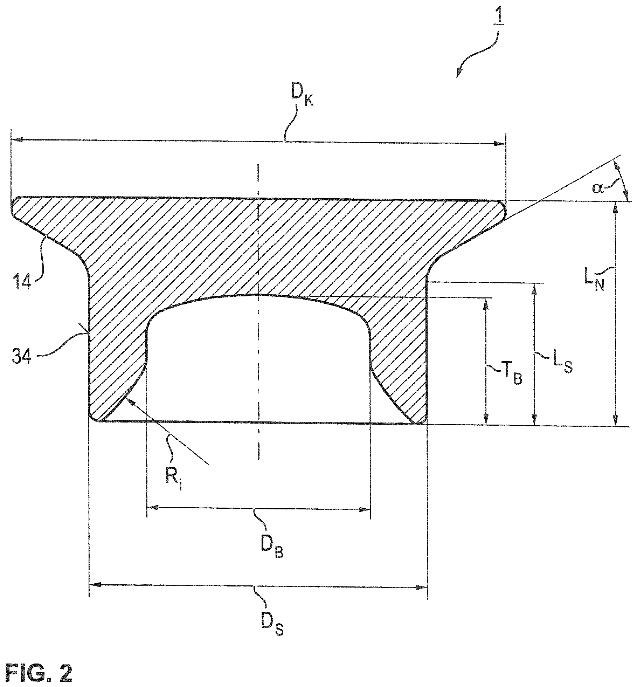

Eine weitere bevorzugte Ausführungsform des Halbhohlstanzniets 1 zeigt Fig. 2. Hier geht der Nietkopf 10 in einer zumindest in Teilbereichen geradlinig verlaufenden Fase 14 in die zylindrische Schaftaußenfläche 34 über. Vorzugsweise ist die Fase 14 in einem Winkel $\alpha$ gleich 30° $\pm$ 2° in Bezug auf die Oberseite des Nietkopfs 10 angeordnet. Während des Fügevorgangs des Halbhohlstanzniets 1 komprimiert die Fläche unterhalb der Fase 14, also abgewandt vom Nietkopf 10, das Material der Decklage $B_1$, während der Nietschaft 30 aufgespreizt wird. Nach dem Fügevorgang wird der Nietkopf 10 und somit das komprimierte Material unterhalb der Fase 14 entlastet und relaxiert, während gleichzeitig der aufgespreizte Nietschaft 30 den Halbhohlstanzniet 1 im Material verankert. Die sich daraus ergebenden Druckspannungen im Blechstapel wirken sich positiv auf die Stanznietverbindung aus, gerade wenn spröde Materialien als Decklage $B_1$ verwendet werden.

Neben den oben beschriebenen funktionell-geometrischen Ausgestaltungen des Halbhohlstanzniets 1, die sich vollständig oder teilweise in der Geometrie des Halbhohlstanzniets 1 realisieren lassen, weist eine bevorzugte Ausführungsform des erfindungsgemäßen Halbhohlstanzniets folgende Abmessungen auf:

Nietlänge $L_N$ = 3 mm $\pm$ 0,1 mm,

Tiefe der Schaftbohrung $T_B$ = 1,5 mm $\pm$ 0,1 mm,

Senkkopfradius $R_S$ = 1,3 mm $\pm$ 0,15 mm,

wobei eine zylindrische Schaftaußenfläche, die sich in Richtung Nietkopf mit konstantem Durchmesser über die Tiefe der Schaftbohrung hinaus erstreckt die Länge $L_S$ ab dem Nietfuß aufweist mit $T_B \leq L_S \leq \frac{3}{2} \times T_B.$ Des Weiteren ist es bevorzugt, dass die Schaftinnenfläche 36 über den Radius $R_i$ = 0,65 mm $\pm$ 0,4 mm in die Schneidkante 44 übergeht.

Eine weitere bevorzugte Ausführungsform des Halbhohlstanzniets 1 weist die folgenden Abmessungen auf:

Nietlänge $L_N$ = 3 mm $\pm$ 0,1 mm,

Tiefe der Schaftbohrung $T_B$ = 1,5 mm $\pm$ 0,1 mm,

die zylindrische Schaftaußenfläche, die sich in Richtung des Nietkopfs 10 mit konstantem Durchmesser $D_S$ über die Tiefe $T_B$ der Schaftbohrung 32 hinaus erstreckt, vorzugsweise über eine Länge $L_S$ ab dem Nietfuß 40 von $T_B \leq L_S \leq \frac{3}{2} \times T_B,$ und eine Unterkopffase, mit der die zylindrische Schaftaußenfläche 34 in dem Winkel $\alpha$ von 30° $\pm$ 2° zwischen Fase 14 und Oberseite des Nietkopfs 10 in den Nietkopf 10 übergeht. Weiterhin bevorzugt geht die Schaftinnenfläche 36 über den Radius $R_i$ = 0,65 mm $\pm$ 0,4 mm in die Schneidkante 44 über.

Eine weitere bevorzugte Ausführungsform des erfindungsgemäßen Stanzniets 1 weist die folgenden Abmessungen auf:

Nietlänge $L_N$ = 3,5 mm $\pm$ 0,1 mm,

Tiefe der Schaftbohrung 32 $T_B$ = 2 mm $\pm$ 0,1 mm,

Senkkopfradius $R_S$ = 1,4 mm $\pm$ 0,15 mm,

mit dem der Kreisbogen 12 aus der zylindrischen Schaftaußenfläche 34 in den Nietkopf 10 übergeht, sowie die zylindrische Schaftaußenfläche, die sich in Richtung Nietkopf mit konstantem Durchmesser $D_S$ über die Tiefe $T_B$ der Schaftbohrung 32 gemäß $T_B \leq L_S \leq \frac{3}{2} \times T_B$ erstreckt. Weiterhin bevorzugt geht die Schaftinnenfläche 36 über den Radius $R_i$ = 1,5 mm $\pm$ 0,4 mm in die Schneidkante 44 über.

Gemäß einer weiteren bevorzugten Ausgestaltung des Halbhohlstanzniets 1 sind folgende Abmessungen vorgesehen:

Nietlänge $L_N$ = 3,5 mm $\pm$ 0,1 mm,

Tiefe der Schaftbohrung 32 $T_B$ = 2 mm $\pm$ 0,1 mm,

die zylindrische Schaftaußenfläche 34, die sich in Richtung Nietkopf 10 mit konstantem Durchmesser $D_S$ über die Tiefe $T_B$ der Schaftbohrung 32 gemäß $T_B \leq L_S \leq \frac{3}{2} \times T_B$ hinaus erstreckt, und die Unterkopffase 14, mit der die zylindrische Schaftaußenfläche 34 in einem Winkel $\alpha$ = 30° $\pm$ 2° zwischen Fase 14 und Kopfoberseite des Nietkopfs 10 in den Nietkopf 10 übergeht. Weiterhin bevorzugt geht die Schaftinnenfläche 36 über einen Kreisbogen mit dem Radius $R_i$ = 1,5 mm $\pm$ 0,4 mm in die Schneidkante 44 über.

*Bezugszeichenliste*

| | |
|---|---|
| 1 | Halbhohlstanzniet |
| 10 | Nietkopf |
| 12 | Kreisbogen des Senkkopfs |
| 14 | Fase des Senkkkopfs |
| 30 | Nietschaft |
| 32 | Schaftbohrung |
| 34 | Schaftaußenfläche |
| 36 | Schaftinnenfläche |
| 38 | Hohlzylindrischer Abschnitt |
| 40 | Nietfuß |
| 42 | Fase am Nietfuß |
| 44 | Schneidkante |
| $L_N$ | Gesamtlänge des Halbhohlstanzniets |
| $T_B$ | Tiefe der Schaftbohrung 32 |
| $B_1, B_2$ | Bleche |
| $B_1$ | Decklage |
| $B_2$ | Basislage |
| $t_1$ | Dicke der Decklage $B_1$ |
| $t_2$ | Dicke der Basislage $B_2$ |
| $t_{2a}, t_{2b}$ | Dicken mehrerer Basislagen |
| $R_i$ | Innerer Nietfußradius |
| $D_K$ | Kopfdurchmesser |
| $D_S$ | Schaftdurchmesser |
| $D_{SP}$ | Durchmesser des aufgespreizten Nietschafts |

**Patentansprüche**

1. Halbhohlstanzniet mit einem Nietkopf und einem Nietschaft mit einer zentralen Schaftbohrung, die eine gemeinsame zentrale Achse X besitzen, **dadurch gekennzeichnet, dass** der Nietschaft eine Schaftaußenfläche und eine die zentrale Schaftbohrung begrenzende Schaftinnenfläche aufweist, die Schaftbohrung eine Tiefe $T_B$ und der Halbhohlstanzniet eine Gesamtlänge $L_N$ haben und folgenden Zusammenhang erfüllt:

$$0,35 \leq \frac{T_B}{L_N} \leq 0,65, \text{ bevorzugt } 0,4 \leq \frac{T_B}{L_N} \leq 0,6 \,,$$

wobei
die Gesamtlänge des Halbhohlstanzniets $L_N \leq 4$ mm und die Schaftaußenfläche und die Schaftinnenfläche im Nietschaft zumindest über einen Teilbereich des Nietschafts einen hohlzylindrischen Abschnitt bilden.

2. Halbhohlstanzniet gemäß Anspruch 1, in dem sich die zylindrische Schaftaußenfläche bis maximal zur Tiefe $T_B$ der Schaftbohrung mit einem konstanten Durchmesser in Richtung des Nietkopfs erstreckt.

3. Halbhohlstanzniet gemäß Anspruch 1, in dem sich die zylindrische Schaftaußenfläche über die Tiefe $T_B$ der Schaftbohrung hinaus mit einem konstanten Durchmesser in Richtung des Nietkopfs erstreckt.

4. Halbhohlstanzniet gemäß einem der vorhergehenden Ansprüche, in dem ein Durchmesser $D_K$ des Nietkopfs und ein Durchmesser $D_S$ des Nietschafts folgende Relation erfüllen:

$$1,35 \leq \frac{D_K}{D_S} \leq 1,75 \,.$$

5. Halbhohlstanzniet gemäß einem der vorhergehenden Ansprüche, in dem die zylindrische Schaftaußenfläche und die Schaftinnenfläche radial außen durch eine radialeinwärts geneigte Fase und radialinnen durch einen radialinneren Radius miteinander verbunden sind, um eine Schneidkante zu bilden.

6. Halbhohlstanzniet gemäß einem der vorhergehenden Ansprüche, der aus Stahl oder einer Stahllegierung besteht.

7. Halbhohlstanzniet gemäß einem der vorhergehenden Ansprüche, dessen zylindrische Schaftaußenfläche über einen Senkkopfradius oder über eine Fase in den Nietkopf übergeht.

8. Halbhohlstanzniet gemäß einem der vorhergehenden Ansprüche, der die folgenden Abmessungen aufweist:

   Nietlänge $L_N$ = 3 mm $\pm$ 0,1 mm,
   Tiefe der Schaftbohrung $T_B$ = 1,5 mm $\pm$ 0,1 mm,
   Senkkopfradius $R_S$ = 1,3 mm $\pm$ 0,15 mm
   sowie eine zylindrische Schaftaußenfläche, die sich in Richtung Nietkopf mit konstantem Durchmesser über die Tiefe der Schaftbohrung hinaus erstreckt.

9. Halbhohlstanzniet gemäß einem der vorhergehenden Ansprüche 1 bis 7, der die folgenden Abmessungen aufweist:

   Nietlänge $L_N$ = 3 mm $\pm$ 0,1 mm,
   Tiefe der Schaftbohrung $T_B$ = 1,5 mm $\pm$ 0,1 mm
   eine zylindrische Schaftaußenfläche, die sich in Richtung Nietkopf mit konstantem Durchmesser über die Tiefe der Schaftbohrung hinauserstreckt, vorzugsweise über eine Länge $L_S$ ab dem Nietfuß von $T_B \leq L_S \leq \frac{3}{2} \times T_B$, und
   eine Unterkopffase, mit der die zylindrische Schaftaußenfläche in einem Winkel $\propto$ von 30° $\pm$ 2° zwischen Fase und Kopfoberseite in den Nietkopf übergeht.

10. Halbhohlstanzniet gemäß der vorhergehenden Ansprüche 1 bis 7, der die folgenden Abmessungen aufweist:

    Nietlänge $L_N$ = 3,5 mm $\pm$ 0,1 mm,
    Tiefe der Schaftbohrung $T_B$ = 2 mm $\pm$ 0,1 mm,
    Senkkopfradius $R_S$ = 1,4 mm $\pm$ 0,15 mm
    sowie eine zylindrische Schaftaußenfläche, die sich in Richtung Nietkopf mit konstantem Durchmesser über die Tiefe der Schaftbohrung hinaus erstreckt.

11. Halbhohlstanzniet gemäß einem der vorhergehenden Ansprüche 1 bis 7, der die folgenden Abmessungen aufweist:

    Nietlänge $L_N$ = 3,5 mm $\pm$ 0,1 mm,
    Tiefe der Schaftbohrung $T_B$ = 2 mm $\pm$ 0,1 mm
    eine zylindrische Schaftaußenfläche, die sich in Richtung Nietkopf mit konstantem Durchmesser über die Tiefe der Schaftbohrung hinauserstreckt, vorzugsweise über eine Länge $L_S$ ab dem Nietfuß von $T_B \leq L_S \leq \frac{3}{2} \times T_B$, und
    eine Unterkopffase, mit der die zylindrische Schaftaußenfläche in einem Winkel $\propto$ von 30° $\pm$ 2° zwischen Fase und Kopfoberseite in den Nietkopf übergeht.

12. Halbhohlstanzniet gemäß Anspruch 8 oder 9 in Kombination mit Anspruch 5, dessen Schaftinnenfläche über einen Radius $R_i$ = 0,65 mm $\pm$ 0,4 mm in die Schneidkante übergeht.

13. Halbhohlstanzniet gemäß Anspruch 10 oder 11 in Kombination mit Anspruch 5, dessen Schaftinnenfläche über einen Radius $R_i$ = 1,5 mm $\pm$ 0,4 mm in die Schneidkante übergeht.

14. Verbindung aus zumindest einem ersten Bauteil und einem zweiten Bauteil mit einem Halbhohlstanzniet, **dadurch gekennzeichnet, dass** die Bauteile eine Gesamtdicke $T_G$ < 1,9 mm aufweisen, eine dem Nietkopf zugewandte Decklage aus härterem Material besteht als eine dem Nietkopf abgewandte Basislage und die Basislage in Richtung der Längsachse des Halbhohlstanzniets dicker ausgebildet ist als die Decklage, wobei ein aufgespreizter Nietschaft mit einem Durchmesser $D_{SP}$ im Verhältnis zu einem Durchmesser des Nietkopfs $D_K$ folgende Relation erfüllt:

$$\frac{D_K}{D_{SP}} \geq 1{,}11,\ \text{bevorzugt}\ \frac{D_K}{D_{SP}} \geq 1{,}15\ \text{und weiter bevorzugt}\ \frac{D_K}{D_{SP}} \geq 1{,}25.$$

**15.** Verbindung gemäß Anspruch 14, in der der Halbhohlstanzniet und die Decklage aus Stahl oder einer Stahllegierung und die Basislage aus Aluminium, einer Aluminiumlegierung, Leichtmetall, einer Leichtmetalllegierung oder einem Material ähnlicher Materialeigenschaften besteht.

**16.** Verbindung gemäß Anspruch 14 oder 15, in der die Decklage durch den Nietschaft durchstanzt ist.

**17.** Verfahren zum Herstellen einer Halbhohlstanznietverbindung in einer Decklage aus einem ersten Material und mindestens einer Basislage aus einem zweiten Material, wobei das erste Material härter ist als das zweite Material, das die folgenden Schritte aufweist:

a. Fügen eines Halbhohlstanzniets in die Decklage und die mindestens eine Basislage und das Verfahren ist **gekennzeichnet durch** den weiteren Schritt:
b. Aufspreizen eines Nietschafts mit zentraler Schaftbohrung des Halbhohlstanzniets während des Fügevorgangs, sodass ein aufgespreizter Nietschaft mit einem Durchmesser $D_{SP}$ im Verhältnis zu einem Durchmesser eines Nietkopfs $D_K$ folgende Relation erfüllen:

$$\frac{D_K}{D_{SP}} \geq 1{,}11,\ \text{bevorzugt}\ \frac{D_K}{D_{SP}} \geq 1{,}15\ \text{und weiter bevorzugt}\ \frac{D_K}{D_{SP}} \geq 1{,}25.$$

**18.** Verfahren nach Anspruch 17, wobei der Halbhohlstanzniet und die Decklage aus Stahl oder einer Stahllegierung bestehen und die mindestens eine Basislage aus Aluminium, einer Aluminiumlegierung, einem Leichtmetall, eine Leichtmetalllegierung oder einem ähnlich weichen Material aufgebaut ist.

**19.** Verfahren nach Anspruch 17 oder 18, wobei der Halbhohlstanzniet während des Fügens die Decklage vollständig durchstanzt.

**20.** Herstellungsverfahren für einen Halbhohlstanzniet, das die folgenden Merkmale aufweist:
Kaltschlagen eines Drahtrohlings zu einem Halbhohlstanzniet mit einem Nietkopf und einem Nietschaft mit einer zentralen Schaftbohrung, die eine gemeinsame zentrale Achse X besitzen, **dadurch gekennzeichnet, dass** der Nietschaft eine Schaftaußenfläche und eine die zentrale Schaftbohrung begrenzende Schaftinnenfläche aufweist, die Schaftbohrung eine Tiefe $T_B$ und der Halbhohlstanzniet eine Gesamtlänge $L_N$ umfasst und folgenden Zusammenhang erfüllt:

$$0{,}35 \leq \frac{T_B}{L_N} \leq 0{,}65,\ \text{bevorzugt}\ 0{,}4 \leq \frac{T_B}{L_N} \leq 0{,}6 \,,$$

wobei
die Gesamtlänge des Halbhohlstanzniets $L_N \leq 4$ mm, die Schaftaußenfläche und die Schaftinnenfläche im Nietschaft einen hohlzylindrischen Abschnitt bilden und sich die zylindrische Schaftaußenfläche zumindest bis zur Tiefe $T_B$ der Schaftbohrung mit einem konstanten Durchmesser in Richtung des Nietkopfs erstreckt.

## Claims

**1.** Semi-hollow self-piercing rivet with a rivet head and a rivet shaft having a central shaft bore, both having a common central axis X, **characterized in that** the rivet shaft has an outer shaft face and an inner shaft face limiting the central shaft bore, the shaft bore has a depth $T_B$ and the semi-hollow self-piercing rivet has a total length $L_N$ and meeting the following relation:

**EP 3 371 467 B1**

$$0.35 \le \frac{T_B}{L_N} \le 0.65, \text{ preferably } 0.4 \le \frac{T_B}{L_N} \le 0.6 \,,$$

wherein
the total length of the semi-hollow self-piercing rivet $L_N \le 4$ mm, the outer shaft face and the inner shaft face in the rivet shaft form a hollow cylindrical section at least over a portion of the rivet shaft.

2. Semi-hollow self-piercing rivet according to claim 1, in which the cylindrical outer shaft face maximally extends to the depth $T_B$ of the shaft bore with a constant diameter in direction of the rivet head.

3. Semi-hollow self-piercing rivet according to claim 1, in which the cylindrical outer shaft face extends beyond the depth $T_B$ of the shaft bore with a constant diameter in direction of the rivet head.

4. Semi-hollow self-piercing rivet according to one of the preceding claims, in which a diameter $D_K$ of the rivet head and a diameter $D_S$ of the rivet shaft meet the following relation:

$$1.35 \le \frac{D_K}{D_S} \le 1.75 \,.$$

5. Semi-hollow self-piercing rivet according to one of the preceding claims, in which the cylindrical outer shaft face and the inner shaft face are connected with each other radially outwards by a radially inwardly inclined chamfer and radially inwards by a radially inner radius to form a cutting edge.

6. Semi-hollow self-piercing rivet according to one of the preceding claims consisting of steel or a steel alloy.

7. Semi-hollow self-piercing rivet according to one of the preceding claims, the cylindrical outer shaft face of which transitions via a countersunk radius or via a chamfer into the rivet head.

8. Semi-hollow self-piercing rivet according to one of the preceding claims, having the following dimensions:

   rivet length $L_N$ = 3 mm $\pm$ 0.1 mm,
   depth of the shaft bore $T_B$ = 1.5 mm $\pm$ 0.1 mm,
   countersunk radius $R_S$ = 1.3 mm $\pm$ 0.15 mm,
   and a cylindrical outer shaft face, which extends with a constant diameter beyond the depth of the shaft bore in direction of the rivet head.

9. Semi-hollow self-piercing rivet according to one of the preceding claims 1 to 7, having the following dimensions:

   rivet length $L_N$ = 3 mm $\pm$ 0.1 mm,
   depth of the shaft bore $T_B$ = 1.5 mm $\pm$ 0.1 mm,
   a cylindrical outer shaft face, extending with a constant diameter beyond the depth of the shaft bore in direction
   of the rivet head, preferably over a length $L_S$ from the rivet foot of $T_B \le L_S \le \frac{3}{2} \times T_B,$ and
   a lower head chamfer, with which the cylindrical outer shaft face transitions at an angle $\alpha$ of 30° $\pm$ 2° between the chamfer and the upper head side into the rivet head.

10. Semi-hollow self-piercing rivet according to the preceding claims 1 to 7, which has the following dimensions:

    rivet length $L_N$ = 3.5 mm $\pm$ 0.1 mm,
    depth of the shaft bore $T_B$ = 2 mm $\pm$ 0.1 mm,
    countersunk radius $R_S$ = 1.4 mm $\pm$ 0.15 mm,
    and a cylindrical outer shaft face, which extends with a constant diameter beyond the depth of the shaft bore in direction of the rivet head.

11. Semi-hollow self-piercing rivet according to one of the preceding claims 1 to 7, which has the following dimensions:

rivet length $L_N$ = 3.5 mm $\pm$ 0.1 mm,
depth of the shaft bore $T_B$ = 2 mm $\pm$ 0.1 mm,
a cylindrical outer shaft face extending with a constant diameter beyond the depth of the shaft bore in direction
of the rivet head, preferably over a length $L_S$ from the rivet foot of $T_B \leq L_S \leq \frac{3}{2} \times T_B,$ and
a lower head chamfer, with which the cylindrical outer shaft face transitions at an angle $\alpha$ of 30° $\pm$ 2° between the chamfer and the upper head side into the rivet head.

12. Semi-hollow self-piercing rivet according to claim 8 or 9 in combination with claim 5, the inner shaft face of which transitions into the cutting edge with a radius $R_i$ = 0.65 mm $\pm$ 0.4 mm.

13. Semi-hollow self-piercing rivet according to claim 10 or 11 in combination with claim 5, the inner shaft face of which transitions into the cutting edge with a radius $R_i$ = 1.5 mm $\pm$ 0.4 mm.

14. Joint of at least a first component and a second component with a semi-hollow self-piercing rivet, **characterized in that** the components have a total thickness $T_G$ < 1.9 mm, a cover layer facing the rivet head is made of harder material than a base layer facing away from the rivet head and that the base layer is in the direction of the longitudinal axis of the semi-hollow self-piercing rivet thicker than the cover layer, wherein a spread out rivet shaft having a diameter $D_{SP}$ in relation to a diameter of the rivet head $D_K$ meets the following relation:

$$\frac{D_K}{D_{SP}} \geq 1.11, \text{ preferably } \frac{D_K}{D_{SP}} \geq 1.15, \text{ and more preferably } \frac{D_K}{D_{SP}} \geq 1.25.$$

15. Joint according to claim 14, in which the semi-hollow self-piercing rivet and the cover layer are made of steel or a steel alloy and the base layer is made of aluminum, an aluminum alloy, light metal, a light metal alloy or a material of similar material properties.

16. Joint according to claim 14 or 15, in which the cover layer is pierced through by the rivet shaft.

17. Manufacturing method for a semi-hollow self-piercing rivet joint in a cover layer of a first material and at least one base layer of a second material, wherein the first material is harder than the second material, comprising the steps of:

   a. joining a semi-hollow self-piercing rivet in the cover layer and the at least one base layer and the method is further **characterized by**:
   b. spreading out a rivet shaft with a central shaft bore of the semi-hollow self-piercing rivet during the joining process, so that an spread out rivet shaft with a diameter $D_{SP}$ in relation to a diameter of a rivet head $D_K$ meets the following relation:

$$\frac{D_K}{D_{SP}} \geq 1.11, \text{ preferably } \frac{D_K}{D_{SP}} \geq 1.15 \text{ and more preferably } \frac{D_K}{D_{SP}} \geq 1.25 .$$

18. Method according to claim 17, wherein the semi-hollow self-piercing rivet and the cover layer are made of steel or a steel alloy and the at least one base layer is made of aluminum, an aluminum alloy, a light metal, a light metal alloy or a similar soft material.

19. Method according to claim 17 or 18, wherein the semi-hollow self-piercing rivet completely pierces through the cover layer during the joining.

20. Manufacturing method for a semi-hollow self-piercing rivet comprising the following features:
cold-forming a wire blank into a semi-hollow self-piercing rivet with a rivet head and a rivet shaft with a central shaft bore, both having a common central axis X, **characterized in that** the rivet shaft comprises an outer shaft face and an inner shaft face limiting the central shaft bore, the central shaft bore has a depth $T_B$ and the semi-hollow self-piercing rivet has a total length $L_N$ and meets the following relation:

$$0.35 \leq \frac{T_B}{L_N} \leq 0.65, \text{ preferably } 0.4 \leq \frac{T_B}{L_N} \leq 0.6,$$

wherein
the total length of the self-piercing rivet $L_N \leq 4$ mm, the outer shaft face and the inner shaft face in the rivet shaft form a hollow cylindrical section and the cylindrical outer shaft face extends at least to the depth $T_B$ of the shaft bore with a constant diameter in the direction of the rivet head.

**Revendications**

1. Rivet auto-poinçonneur semi-cylindrique comprenant une tête de rivet et une tige de rivet dotée d'un alésage central de tige, qui possèdent un axe central X commun, **caractérisé en ce que** la tige de rivet comporte une surface extérieure de tige et une surface intérieure de tige limitant l'alésage central de tige, l'alésage de tige présente une profondeur $T_B$ et le rivet auto-poinçonneur semi-cylindrique présente une longueur totale $L_N$ et satisfait à la relation suivante :

$$0,35 \leq \frac{T_B}{L_N} \leq 0,65, \text{ de préférence } 0,4 \leq \frac{T_B}{L_N} \leq 0,6,$$

dans lequel
la longueur totale du rivet auto-poinçonneur semi-cylindrique $L_N$ est $\leq 4$ mm et la surface extérieure de tige et la surface intérieure de tige dans la tige de rivet forment une portion cylindrique creuse au moins sur une partie de la tige de rivet.

2. Rivet auto-poinçonneur semi-cylindrique selon la revendication 1, dans lequel la surface extérieure cylindrique de tige s'étend en direction de la tête de rivet avec un diamètre constant au maximum jusqu'à la profondeur $T_B$ de l'alésage de tige.

3. Rivet auto-poinçonneur semi-cylindrique selon la revendication 1, dans lequel la surface extérieure cylindrique de tige s'étend en direction de la tête de rivet avec un diamètre constant au-delà de la profondeur $T_B$ de l'alésage de tige.

4. Rivet auto-poinçonneur semi-cylindrique selon l'une des revendications précédentes, dans lequel un diamètre $D_K$ de la tête de rivet et un diamètre $D_S$ de la tige de rivet satisfont à la relation suivante :

$$1,35 \leq \frac{D_K}{D_S} \leq 1,75.$$

5. Rivet auto-poinçonneur semi-cylindrique selon l'une des revendications précédentes, dans lequel la surface extérieure cylindrique de tige et la surface intérieure de tige sont reliées l'une à l'autre radialement à l'extérieur par un chanfrein incliné radialement vers l'intérieur et radialement à l'intérieur par un rayon radialement intérieur, pour former une arête coupante.

6. Rivet auto-poinçonneur semi-cylindrique selon l'une des revendications précédentes, qui est constitué d'acier ou d'un alliage d'acier.

7. Rivet auto-poinçonneur semi-cylindrique selon l'une des revendications précédentes, dont la surface extérieure cylindrique de tige devient la tête de rivet par le biais d'un rayon de tête conique ou par le biais d'un chanfrein.

8. Rivet auto-poinçonneur semi-cylindrique selon l'une des revendications précédentes, qui présente les dimensions suivantes :

longueur de rivet $L_N$ = 3 mm $\pm$ 0,1 mm,
profondeur de l'alésage de tige $T_B$ = 1,5 mm $\pm$ 0,1 mm,
rayon de tête conique $R_S$ = 1,3 mm $\pm$ 0,15 mm

ainsi qu'une surface extérieure cylindrique de tige, qui s'étend en direction de la tête de rivet avec un diamètre constant au-delà de la profondeur de l'alésage de tige.

9. Rivet auto-poinçonneur semi-cylindrique selon l'une des revendications 1 à 7, qui présente les dimensions suivantes :

longueur de rivet $L_N$ = 3 mm $\pm$ 0,1 mm,
profondeur de l'alésage de tige $T_B$ = 1,5 mm $\pm$ 0,1 mm,
une surface extérieure cylindrique de tige, qui s'étend en direction de la tête de rivet avec un diamètre constant au-delà de la profondeur de l'alésage de tige, de préférence sur une longueur $L_S$ à partir du pied de rivet de

$$T_B \leq L_S \leq \frac{3}{2} \times T_B, \quad \text{et}$$

un chanfrein de dessous de tête, avec lequel la surface extérieure cylindrique de tige devient la tête de rivet selon un angle $\alpha$ de 30° $\pm$ 2° entre le chanfrein et la face supérieure de tête.

10. Rivet auto-poinçonneur semi-cylindrique selon les revendications précédentes 1 à 7, qui comporte les dimensions suivantes :

longueur de rivet $L_N$ = 3,5 mm $\pm$ 0,1 mm,
profondeur de l'alésage de tige $T_B$ = 2 mm $\pm$ 0,1 mm,
rayon de tête conique $R_S$ = 1,4 mm $\pm$ 0,15 mm
ainsi qu'une surface extérieure cylindrique de tige, qui s'étend en direction de la tête de rivet avec un diamètre constant au-delà de la profondeur de l'alésage de tige.

11. Rivet auto-poinçonneur semi-cylindrique selon l'une des revendications précédentes 1 à 7, qui comporte les dimensions suivantes :

longueur de rivet $L_N$ = 3,5 mm $\pm$ 0,1 mm,
profondeur de l'alésage de tige $T_B$ = 2 mm $\pm$ 0,1 mm,
une surface extérieure cylindrique de tige, qui s'étend en direction de la tête de rivet avec un diamètre constant au-delà de la profondeur de l'alésage de tige, de préférence sur une longueur $L_S$ à partir du pied de rivet de

$$T_B \leq L_S \leq \frac{3}{2} \times T_B, \quad \text{et}$$

un chanfrein de dessous de tête, avec lequel la surface extérieure cylindrique de tige devient la tête de rivet selon un angle $\alpha$ de 30° $\pm$ 2° entre le chanfrein et la face supérieure de tête.

12. Rivet auto-poinçonneur semi-cylindrique selon la revendication 8 ou 9 en combinaison avec la revendication 5, dont la surface intérieure de tige devient l'arête coupante par le biais d'un rayon $R_i$ = 0,65 mm $\pm$ 0,4 mm.

13. Rivet auto-poinçonneur semi-cylindrique selon la revendication 10 ou 11 en combinaison avec la revendication 5, dont la surface intérieure de tige devient l'arête coupante par le biais d'un rayon $R_i$ = 1,5 mm $\pm$ 0,4 mm.

14. Liaison constituée d'au moins un premier élément et un second élément au moyen d'un rivet auto-poinçonneur semi-cylindrique, **caractérisée en ce que** les éléments présentent une épaisseur totale $T_G$ < 1,9 mm, une couche de recouvrement orientée vers la tête de rivet est constituée de métal plus dur qu'une couche de base orientée dans la direction opposée à la tête de rivet et la couche de base est réalisée plus épaisse dans la direction de l'axe longitudinal du rivet auto-poinçonneur semi-cylindrique que la couche de recouvrement, une tige de rivet élargie avec un diamètre $D_{SP}$ satisfaisant à la relation suivante par rapport au diamètre de la tête de rivet $D_K$ :

$$\frac{D_K}{D_{SP}} \geq 1,11, \text{ de préférence } \frac{D_K}{D_{SP}} \geq 1,15 \text{ et de préférence encore } \frac{D_K}{D_{SP}} \geq 1,25.$$

15. Liaison selon la revendication 14, dans laquelle le rivet auto-poinçonneur semi-cylindrique et la couche de recouvrement sont constitués d'acier ou d'un alliage d'acier et la couche de base d'aluminium, d'un alliage d'aluminium, de métal léger, d'un alliage de métal léger ou d'un matériau présentant des propriétés de matériau similaires.

**16.** Liaison selon la revendication 14 ou 15, dans laquelle la couche de recouvrement est perforée par la tige de rivet.

**17.** Procédé de réalisation d'une liaison par rivet auto-poinçonneur semi-cylindrique dans une couche de recouvrement en un premier matériau et au moins une couche de base en un second matériau, le premier matériau étant plus dur que le second matériau, le procédé comportant les étapes suivantes :

> a. insertion d'un rivet auto-poinçonneur semi-cylindrique dans la couche de recouvrement et l'au moins une couche de base et le procédé étant **caractérisé par** l'étape supplémentaire :
> b. élargissement d'une tige de rivet avec alésage central de tige du rivet auto-poinçonneur semi-cylindrique pendant le processus d'insertion, de telle sorte qu'une tige de rivet élargie avec un diamètre $D_{SP}$ satisfait à la relation suivante par rapport à un diamètre d'une tête de rivet $D_K$ :

$$\frac{D_K}{D_{SP}} \geq 1{,}11 \text{, de préférence } \frac{D_K}{D_{SP}} \geq 1{,}15 \text{ et de préférence encore } \frac{D_K}{D_{SP}} \geq 1{,}25.$$

**18.** Procédé selon la revendication 17, dans lequel le rivet auto-poinçonneur semi-cylindrique et la couche de recouvrement sont constitués d'acier ou d'un alliage d'acier et l'au moins une couche de base est construite en aluminium, en un alliage d'aluminium, en un métal léger, en un alliage de métal léger ou en un matériau doux similaire.

**19.** Procédé selon la revendication 17 ou 18, dans lequel le rivet auto-poinçonneur semi-cylindrique perfore entièrement la couche de recouvrement pendant l'insertion.

**20.** Procédé de fabrication d'un rivet auto-poinçonneur semi-cylindrique, qui comporte les caractéristiques suivantes : frappe à froid d'un fil d'ébauche pour former un rivet auto-poinçonneur semi-cylindrique comprenant une tête de rivet et une tige de rivet dotée d'un alésage central de tige, qui possèdent un axe central X commun, **caractérisé en ce que** la tige de rivet comporte une surface extérieure de tige et une surface intérieure de tige limitant l'alésage central de tige, l'alésage de tige comprend une profondeur $T_B$ et le rivet auto-poinçonneur semi-cylindrique comprend une longueur totale $L_N$ et satisfait à la relation suivante :

$$0{,}35 \leq \frac{T_B}{L_N} \leq 0{,}65 \text{, de préférence } 0{,}4 \leq \frac{T_B}{L_N} \leq 0{,}6,$$

dans lequel
la longueur totale du rivet auto-poinçonneur semi-cylindrique $L_N$ est $\leq 4$ mm, la surface extérieure de tige et la surface intérieure de tige dans la tige de rivet forment une portion cylindrique creuse et la surface extérieure cylindrique de tige s'étend en direction de la tête de rivet avec un diamètre constant au moins jusqu'à la profondeur $T_B$ de l'alésage de tige.

FIG. 1

FIG. 2

**FIG. 3A**

**FIG. 3B**

**FIG. 4**

FIG. 5A

FIG. 5B

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006028537 B3
- DE 102005052360 A1
- DE 19648231 A1

- EP 0833063 A1
- DE 60115059 T2
- DE 102013020504 A1